# FASCICULE DE BREVET EUROPEEN

(11) **EP 2 008 270 B1**
(45) Date de publication et mention de la délivrance du brevet: **15.01.2020**
(21) Numéro de dépôt: 07788941.8
(22) Date de dépôt: 12.04.2007
(51) Int. Cl.: G10L 19/005

(54) **PROCEDE DE NOTIFICATION D'UN DEFAUT DE TRANSMISSION D'UN SIGNAL AUDIO**
VERFAHREN ZUR IDENTIFIZIERUNG VON FEHLERN VON AUDIOSIGNALÜBERTRAGUNG
METHOD OF NOTIFYING A TRANSMISSION DEFECT OF AN AUDIO SIGNAL

(30) Priorité: 18.04.2006 FR 0603429
(43) Date de publication de la demande: 31.12.2008
(73) Titulaire: Orange, 75015 Paris (FR)
(72) Inventeur: DELEAM, David, 22700 Perros Guirec (FR); CLARIMON, Laurent, 22300 Lannion (FR)
(86) Numéro de dépôt international: PCT/FR2007/051103
(87) Numéro de publication internationale: WO 2007/122339

(56) Documents cités:
- Y(J) STEIN R SHASHOUA R INSLER M ANAVI RAD DATA COMMUNICATIONS: "TDM over IP" IETF STANDARD-WORKING-DRAFT, INTERNET ENGINEERING TASK FORCE, IETF, CH, vol. pwe3, no. 1, 31 mai 2004 (2004-05-31), XP015026064 ISSN: 0000-0004

## Description

La présente invention concerne un procédé de notification sur un lien aval d'un élément de réseau d'un défaut de transmission affectant un signal audio codé sur un lien amont dudit élément de réseau.

L'invention trouve une application particulièrement avantageuse lors du passage, via une passerelle de communication, de données audio codées d'un premier type de transport sur un lien amont à un deuxième type de transport sur un lien aval.

Tout l'intérêt de l'invention apparaît lorsqu'un des deux liens fonctionnant par trames de données ne permet pas, de par sa nature, une notification aisée d'informations de défaut de transmission, comme la perte de trames par exemple. Cette situation se rencontre typiquement dans le cas d'un lien aval synchrone de type DECT (« Digital Enhanced Cordless Telecommunications ») devant insérer toutes les 10 ms une trame de 80 octets correspondant à un débit fixe de 32 kbit/s.

Dans une application VoIP (Voix sur IP), le lien amont peut être un lien IP Ethernet asynchrone sous protocole RTP (« Real Time Protocol »).

Un défaut de transmission sur le lien amont peut être constitué par une perte de paquets IP sur ce lien ou une absence, au niveau de l'élément de réseau, de trames à transmettre sur le lien aval, ledit élément de réseau pouvant être une passerelle de communication domestique par exemple.

On connaît deux procédés pour traiter ce défaut de transmission :
- la passerelle est équipée d'un codeur et d'un décodeur audio ainsi que d'un mécanisme de correction d'erreurs. La passerelle décode les paquets audio reçus et, si elle détecte une perte de paquets, elle active son mécanisme de correction d'erreurs en générant une ou plusieurs trames qui seront codées puis émises sur le lien aval synchrone, par exemple, en remplacement des trames manquantes. Le terminal audio en extrémité du lien synchrone décode toutes les trames reçues, y compris les trames de remplacement, et fournit le signal audio correspondant.
- lorsqu'une perte de paquets sur le lien amont est détectée, l'élément de réseau faisant office de passerelle répète la dernière trame qu'il a précédemment envoyée sur le lien aval synchrone par exemple, et ceci autant de fois qu'il le faut pour remplacer toutes les trames manquantes sur ce dernier lien.

Le document intitulé "TDM over IP", de Y(J) Stein et al., paru dans IETF Standard-working-Draft, Internet Engineering Task Force, IETF, CH, Vol. pwe3, no. 1, 31 mai 2004 (2004-05-31), décrit en particulier (section 6.1 du document) une technique, appartenant à l'état de la technique précité, pour remédier à la perte de paquets survenant au cours de la transmission de paquets traversant des réseaux TDM (*Time Division Multiplexing*) et un réseau PSN (*Packet Switch Nework*).

Selon la technique exposée dans ce document, la perte de paquets est traitée par l'émission de paquets de bourrage (*filler packets*) pour remplacer les paquets perdus. En particulier, pour le transport de la voix, les échantillons de parole perdus sont remplacés par une valeur constante prédéterminée, choisie de manière à minimiser son effet perceptuel. En variante, le paquet reçu précédemment peut être répété à la place du paquet perdu.

Cependant, ces procédés connus permettant de prendre en compte des défauts de transmission en amont de l'élément de réseau présentent un certain nombre d'inconvénients.

Le premier procédé nécessite la présence d'un décodeur, d'un mécanisme de correction d'erreur et d'un codeur au niveau de la passerelle domestique, en plus du décodeur déjà présent dans le terminal audio en extrémité du lien aval synchrone. Ceci complexifie sensiblement l'architecture de la passerelle.

Le deuxième procédé conduit à une qualité de restitution sous-optimale du fait de l'introduction de répétitions de syllabes lors de pertes sur le premier lien amont. Par exemple, si la dernière trame envoyée avant la perte de paquets est la dernière syllabe « -ture » du mot « voiture », la passerelle peut être amenée à réémettre cette syllabe plusieurs fois pour combler les trames perdues, ce qui se traduit après décodage par le terminal par la séquence sonore « voiture-ture-ture-... », particulièrement désagréable à écouter.

Aussi, le problème technique à résoudre par l'objet de la présente invention est de proposer un procédé de notification sur un lien aval d'un élément de réseau d'un défaut de transmission affectant un signal audio codé sur un lien amont dudit élément de réseau, qui permettrait de garantir une écoute de bonne qualité, même en cas de défauts de transmission amont, tout en évitant le recours à une architecture d'élément de réseau complexe ou à des protocoles supplémentaires.

La solution au problème technique posé consiste, selon la présente invention, en ce que ledit procédé comprend une étape d'émission par l'élément de réseau, sur ledit lien aval, d'un signal de notification codé audio contenant un motif spécifique de notification.

Ainsi, lorsqu'il détecte un défaut de transmission sur le lien amont, l'élément de réseau, telle qu'une passerelle domestique, émet en aval un signal codé audio au même format que les signaux audio codés normalement émis, mais contenant une information particulière, à savoir la notification de la détection d'un défaut, sous la forme d'un motif spécifique. La passerelle ne nécessite donc aucun équipement lourd supplémentaire comme un décodeur, un codeur ou un mécanisme de correction d'erreurs.

La notification du défaut de transmission, via le motif spécifique, est reçue par le terminal audio destinataire, lequel peut alors traiter cette information selon deux modes différents.

Dans un premier mode de traitement, l'invention prévoit que ledit terminal audio comprend un module de détection d'au moins un motif spécifique de notification transmis dans un signal de notification codé audio émis par un élément de réseau à la suite de la détection par ledit élément de réseau d'un défaut de transmission affectant un signal audio codé sur un lien amont dudit élément de réseau.

Ayant détecté de cette manière la présence d'un défaut dans le signal audio transmis, le terminal peut alors prendre les mesures appropriées pour traiter ce défaut. En particulier, si ledit terminal comprend un module de correction d'au moins un défaut de transmission, un mécanisme de correction d'erreurs peut être déclenché prenant en compte les signaux reçus dans le passé. De tels mécanismes sont connus de l'homme du métier et n'entrent pas dans le champ de la présente invention.

Dans un deuxième mode de traitement, le signal codé audio contenant le motif spécifique de notification est simplement décodé par le terminal comme les autres signaux codés reçus. Cependant, il est prévu par l'invention que ledit motif spécifique est neutre au décodage audio.

En particulier, ledit motif spécifique présente une probabilité d'occurrence sensiblement nulle par rapport aux échantillons codés audio normaux, notamment les échantillons de parole. L'intérêt de choisir un motif très peu probable est de limiter au maximum les erreurs de détection de motif puisqu'un signal audio quelconque codé ne fera apparaître naturellement le motif que très exceptionnellement.

De même, il est envisagé que ledit motif spécifique présente après décodage une énergie sensiblement nulle, à savoir très faible et donc quasiment inaudible par l'oreille humaine.

On comprend que ces dernières caractéristiques concernant la neutralité au décodage du motif de notification sont particulièrement avantageuses car elles permettent deux implémentations possibles de l'invention. Dans une implémentation optimale, le motif spécifique de notification déclenche un mécanisme de correction d'erreurs si le terminal audio en est équipé. Dans une implémentation sous-optimale, sans module de détection ni correction d'erreurs, le motif spécifique n'introduit pas de forts défauts dans le signal décodé, ce qui revient en fait à effectuer une correction d'erreur par insertion de silences.

En d'autres termes, le procédé conforme à l'invention est compatible avec tous les terminaux audio qu'ils soient ou non équipés d'un module de détection de motifs de notification et/ou d'un module de correction d'erreurs.

Le défaut de transmission sur le lien en amont de l'élément de réseau peut avoir des origines multiples.

Selon un premier exemple, ledit défaut de transmission est un manque d'au moins une trame de signal à transmettre sur un lien aval synchrone. Dans ce cas, l'élément de réseau ne peut transmettre une ou plusieurs trames consécutives sur le lien synchrone, et, pour compenser ce défaut incompatible avec le fonctionnement synchrone du lien, il émet un signal de notification dans lequel ledit signal de notification est une trame contenant ledit motif spécifique, émise par l'élément de réseau sur le lien aval synchrone en remplacement de ladite trame manquante à transmettre sur ledit lien aval synchrone.

Deux situations sont possibles, ou bien ledit manque de trame résulte d'une perte d'au moins un paquet de signal sur un lien amont asynchrone, ou bien ledit manque de trame résulte d'une absence de trame à transmettre dans un registre dudit élément de réseau. Cette dernière situation se présente par exemple en cas de gigue sur le lien amont asynchrone qui se traduit par un « vide » dans le registre du type FIFO de l'élément de réseau.

Selon un deuxième exemple, ledit défaut de transmission est une altération du signal sur le lien amont. Dans le cas d'un lien aval synchrone, aucune trame à transmettre ne manque mais une ou plusieurs trames sont erronées. L'invention prévoit alors que ledit signal de notification est un signal contenant ledit motif spécifique, émis par l'élément de réseau sur le lien aval en remplacement dudit signal altéré sur le lien amont.

L'invention concerne également un dispositif de notification à un terminal audio sur un lien aval d'un élément de réseau d'un défaut de transmission affectant un signal audio codé sur un lien amont dudit élément de réseau, remarquable en ce que ledit élément de réseau comprend des moyens de détection d'au moins un défaut de transmission amont et des moyens aptes à transmettre au terminal audio sur ledit lien aval un signal de notification codé audio contenant un motif spécifique de notification.

L'invention concerne de plus un dispositif de notification à un deuxième élément de réseau sur un lien aval d'un premier élément de réseau d'un défaut de transmission affectant un signal audio codé sur un lien amont dudit premier élément de réseau, remarquable en ce que le premier élément de réseau comprend des moyens de détection d'au moins un défaut de transmission amont et des moyens aptes à transmettre au deuxième élément de réseau sur ledit lien aval un signal de notification codé audio contenant un motif spécifique de notification.

L'invention concerne en outre un élément de réseau, remarquable en ce qu'il comprend des moyens de détection d'au moins un défaut de transmission affectant un signal audio codé sur un lien amont dudit élément de réseau et des moyens aptes à émettre sur un lien aval un signal de notification codé audio contenant un motif spécifique de notification.

L'invention concerne par ailleurs un programme d'ordinateur, destiné à être implanté dans un élément de réseau selon l'invention, comprenant des instructions de code pour l'exécution du procédé selon l'invention lorsque que ledit programme est exécuté par un ordinateur.

De même, l'invention concerne un programme d'ordinateur, destiné à être implanté dans un terminal audio selon l'invention, comprenant des instructions de code pour l'exécution du procédé selon l'invention lorsque que ledit programme est exécuté par un ordinateur.

La description qui va suivre en regard des dessins annexés, donnés à titre d'exemples non limitatifs, fera bien comprendre en quoi consiste l'invention et comment elle peut être réalisée.
La figure 1 est un schéma d'un dispositif de notification de défaut de transmission selon un premier mode de réalisation de l'invention.
La figure 2 est un schéma d'un dispositif de notification de défaut de transmission selon un deuxième mode de réalisation de l'invention.
La figure 3 est un schéma d'un dispositif de notification de défaut de transmission selon un troisième mode de réalisation de l'invention.

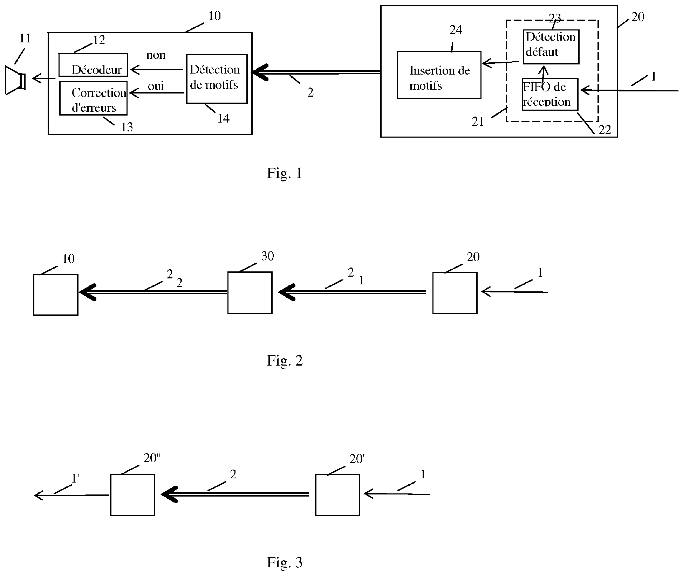

Sur la figure 1 est représenté un dispositif destiné à notifier à un terminal audio 10 en extrémité d'un lien 2 en aval d'un élément 20 de réseau un défaut de transmission affectant un signal audio codé sur un lien 1 en amont de la passerelle 20.

Dans cet exemple de réalisation, le lien amont 1 est un lien IP asynchrone, l'élément 20 de réseau est une passerelle domestique de VoIP et le lien aval 2 est un lien synchrone de type DECT, ou autre comme un lien Bluetooth.

Le défaut de transmission envisagé ici est un manque d'au moins une trame à transmettre par la passerelle 20 sur le lien synchrone 2.

Ce manque de trame peut résulter de la perte de paquets sur le lien asynchrone IP 1. Un paquet pouvant contenir plusieurs trames, la perte d'un paquet en amont peut donc entraîner la perte de plusieurs trames à transmettre en aval. Dans ce cas, la pile 21 de protocole de gestion de la Voix sur IP de la passerelle 20 comprend un détecteur 23 de pertes de paquets apte à détecter la rupture dans la continuité des numéros Ns de séquences reçus dans les paquets RTP consécutifs.

Le manque de trame peut aussi résulter d'une gigue sur le réseau amont et/ou de l'asynchronisme des terminaux, avec pour conséquence de créer un «vide» dans le registre FIFO 22 de réception de la pile 21. Ce « vide » correspond à une absence de trame à transmettre sur le lien synchrone 2.

Si l'un ou l'autre de ces défauts est détecté, à savoir perte de paquet(s) ou absence de trame(s) à transmettre, au moins un motif spécifique de notification est inséré par un module 24 d'insertion de la passerelle 20 dans une ou plusieurs trames codées audio à la place de la ou des trames manquantes. Cette ou ces trames de remplacement sont ensuite émises sur le lien synchrone 2 vers le terminal audio 10.

Dans le cas où les trames sur le lien synchrone 2 sont des trames de 10 ms par exemple, on comprend qu'une perte d'un paquet IP de 40 ms se traduira par l'émission par la passerelle 20 de quatre trames de remplacement de 10 ms contenant le motif spécifique. Une gigue de 10 ms sur un paquet IP provoquera un « vide » d'une trame qui sera compensé par l'émission d'une seule trame de remplacement contenant le motif spécifique.

Le terminal 10 peut être un terminal DECT, Bluetooth ou autre. Il comporte un écouteur ou haut-parleur 11, un décodeur audio 12 de parole ou de son ainsi qu'un module 14 de détection de motifs spécifiques de notification. Si un motif de notification est détecté par le module 14, un module 13 de correction d'erreurs est mis en œuvre par le terminal 10.

Si le terminal 10 ne dispose pas de module 14 de détection de motifs, ni de module 13 de correction d'erreurs, la trame codée audio contenant le motif spécifique est décodée comme une trame standard par le décodeur 12. C'est pourquoi il est recommandé par l'invention que ce motif spécifique soit neutre au décodage du fait qu'il est choisi de manière à présenter une occurrence peu probable et/ou une énergie faible.

Le motif spécifique de notification doit être adapté au type de codeur audio utilisé et peut être déterminé empiriquement. Dans le cas du codeur G.722, le demandeur a établi que le motif binaire 0xFF répété sur la longueur d'une trame pouvait convenir. Par exemple, 80 octets 0xFF pour remplir une trame de 640 bits et 10 ms sur un lien synchrone DECT.

La figure 2 illustre un second mode de réalisation de l'invention dans lequel un lien synchrone 2 est composé de deux sous-liens de nature différente, à savoir, par exemple, un premier sous-lien 2₁ USB entre la passerelle 20 et un élément 30 de réseau, suivi d'un deuxième sous-lien 2₂ DECT jusqu'au terminal 10.

Les défauts de transmission survenant sur le lien synchrone 1 sont pris en compte par la passerelle 20 de la manière qui vient d'être décrite en détail en référence à la figure 1.

Cependant, l'élément 30 de réseau peut, en outre, prendre en charge les défauts de transmission sur le premier sous-lien 2₁ USB, que ce soit une perte de trame ou une altération d'une trame existante, par perte de bits par exemple.

Dans ce cas, l'élément 30 de réseau comprend, comme la passerelle 20, un moyen de détection de défauts et un moyen d'insertion d'un motif spécifique de notification identique au motif mis en œuvre par la passerelle 20. Ce motif est inclus par l'élément 30 de réseau dans une trame remplaçant une trame manquante ou se substituant à une trame existante altérée.

A réception et détection d'une trame incluant le motif spécifique, le terminal 10 active son mécanisme de correction d'erreurs sans distinction sur l'origine du défaut ainsi notifié, celui-ci pouvant provenir du lien asynchrone 1 ou du sous-lien synchrone 2₁.

La figure 3 montre un troisième mode de réalisation de l'invention mettant en œuvre un premier élément 20' de réseau servant de passerelle entre un lien amont asynchrone 1 et un lien aval synchrone 2 terminé par un deuxième élément 20" de réseau servant lui-même de passerelle entre le lien synchrone 2 et un lien aval asynchrone 1'. On supposera que les codeurs utilisés sur chaque lien sont identiques.

A titre d'exemple, le schéma de liens de la figure 3 pourrait être disposé en amont des schémas des figures 1 et 2.

Si la passerelle 20' détecte une perte de paquets sur le lien asynchrone 1, un motif spécifique de notification est inséré dans une trame de remplacement émise par ladite passerelle 20' sur le lien synchrone 2.

Dans le cas où la passerelle 20" n'est pas équipée de module de détection de motifs, ladite trame de remplacement est transmise telle qu'elle sur le lien aval asynchrone 1' jusqu'à aboutir éventuellement à un terminal 10 qui traitera le motif de notification de la manière qui a été exposée plus haut.

Dans le cas où la passerelle 20' comporte un module de détection de motifs, le défaut détecté par la passerelle 20' est reportée en aval par la passerelle 20". Si, par exemple, le défaut détecté par la passerelle 20' est la perte sur le lien 1 du paquet portant le numéro de séquence Ns=8, la passerelle 20' émet un motif spécifique de notification dans une ou plusieurs trames sur le lien 2 correspondant aux trames perdues avec le paquet « 8 ». La passerelle 20" détecte alors les trames portant ledit motif spécifique mais sans reconstituer un paquet de remplacement « 8 », le paquet « 8 » restant manquant sur le lien asynchrone 1'. Ce défaut sera pris en charge en aval par une passerelle analogue à la passerelle 20 des figures 1 et 2.

## Revendications

1. Procédé de notification, à un terminal (10) sur un lien aval (2 ; 2₂) d'un élément (20 ; 30) de réseau, d'un défaut de transmission affectant un signal audio codé sur un lien amont (1 ; 2₁) dudit élément de réseau, **caractérisé en ce qu'**il comprend :
- une étape d'émission par l'élément (20 ; 30) de réseau, sur ledit lien aval, d'un signal de notification codé audio contenant au moins un motif spécifique de notification inséré à la place d'une trame manquante ou altérée, à destination du terminal (10) ; ledit motif spécifique étant destiné à informer ledit terminal d'un défaut de transmission et ledit motif spécifique étant configuré pour déclencher un mécanisme de correction d'erreurs mis en œuvre par le terminal pour corriger ledit défaut de transmission.

2. Procédé selon la revendication 1, **caractérisé en ce que** ledit motif spécifique présente une probabilité d'occurrence très faible.

3. Procédé selon l'une quelconque des revendications 1 à 2, **caractérisé en ce que** ledit motif spécifique présente après décodage une énergie très faible.

4. Procédé selon l'une quelconque des revendications 1 à 3, **caractérisé en ce que** ledit défaut de transmission est un manque d'au moins une trame de signal à transmettre sur un lien aval synchrone (2 ; 2₂).

5. Procédé selon la revendication 4, **caractérisé en ce que** ledit manque de trame résulte d'une perte d'au moins un paquet de signal sur un lien amont asynchrone (1).

6. Procédé selon la revendication 4, **caractérisé en ce que** ledit manque de trame résulte d'une absence de trame à transmettre dans un registre (22) dudit élément (20) de réseau.

7. Procédé selon l'une quelconque des revendications 4 à 6, **caractérisé en ce que** ledit signal de notification est une trame contenant ledit motif spécifique, émise par l'élément (20) de réseau sur le lien aval synchrone (2), en remplacement de ladite trame manquante à transmettre sur ledit lien aval synchrone.

8. Procédé selon l'une quelconque des revendications 1 à 3, **caractérisé en ce que** ledit défaut de transmission est une altération du signal sur le lien amont (2₁).

9. Procédé selon la revendication 8, **caractérisé en ce que** ledit signal de notification est un signal contenant ledit motif spécifique, émis par l'élément (30) de réseau sur le lien aval (2₂), en remplacement dudit signal altéré sur le lien amont (2₁).

10. Élément (20) de réseau, **caractérisé en ce qu'**il comprend des moyens (23) de détection d'au moins un défaut de transmission affectant un signal audio codé sur un lien amont (1) dudit élément de réseau, et des moyens (24) aptes à émettre sur un lien aval (2), un signal de notification codé audio contenant au moins un motif spécifique de notification de défaut, à destination d'un terminal (10), ledit motif spécifique étant inséré à la place d'une trame manquante ou altérée, étant destiné à informer ledit terminal d'un défaut de transmission et étant configuré pour déclencher un mécanisme de correction d'erreurs mis en œuvre par le terminal pour corriger ledit défaut de transmission..

11. Programme d'ordinateur, destiné à être implanté dans un élément (20) de réseau selon la revendication 10, comprenant des instructions de code pour l'exécution d'un procédé selon l'une quelconque des revendications 1 à 9 lorsque que ledit programme est exécuté par un ordinateur.

12. Terminal audio (10), **caractérisé en ce qu'**il comprend un module (14) de détection d'au moins un motif spécifique de notification inséré à la place d'une trame manquante ou défectueuse et transmis dans un signal de notification codé audio émis par un élément (20) de réseau, à la suite de la détection par ledit élément de réseau d'un défaut de transmission affectant un signal audio codé sur un lien amont (1) dudit élément (20) de réseau, ledit motif étant destiné à informer le terminal d'un défaut de transmission, et un module (13) de correction d'au moins un défaut de transmission déclenché suite à la détection dudit motif spécifique de notification par le terminal audio.

13. Procédé de réception, par un terminal, d'un signal de notification codé audio contenant au moins un motif spécifique de notification inséré à la place d'une trame manquante ou altérée et destiné à informer le terminal d'un défaut de transmission, ledit signal de notification étant émis par un élément de réseau sur un lien aval à destination dudit terminal, suite à la détection par l'élément de réseau d'un défaut de transmission affectant un signal audio codé sur un lien amont dudit élément de réseau, le procédé est **caractérisé en ce que** la détection par le terminal dudit motif spécifique de notification dans ledit signal de notification codé audio déclenche une étape de correction par ledit terminal dudit défaut de transmission.

14. Programme d'ordinateur, destiné à être implanté dans un terminal audio (10) selon la revendication 12, comprenant des instructions de code pour l'exécution d'un procédé selon la revendication 13 lorsque que ledit programme est exécuté par un ordinateur.

## Patentansprüche

1. Verfahren zur Benachrichtigung eines Endgeräts (10), auf einer stromabwärtigen Verbindung (2; 2₂) eines Netzelements (20; 30), über einen Übertragungsfehler, der sich auf ein codiertes Audiosignal auf einer stromaufwärtigen Verbindung (1; 2₁) des Netzelements auswirkt, **dadurch gekennzeichnet, dass** es enthält:
- einen Schritt des Sendens durch das Netzelement (20; 30) eines mindestens ein anstelle eines fehlenden oder veränderten Rahmens eingefügtes spezifisches Benachrichtigungsmuster enthaltenden codierten Benachrichtigungs-Audiosignals auf der stromabwärtigen Verbindung an das Endgerät (10); wobei das spezifische Muster dazu bestimmt ist, das Endgerät über einen Übertragungsfehler zu informieren, und das spezifische Muster konfiguriert ist, einen Fehlerkorrekturmechanismus auszulösen, der vom Endgerät durchgeführt wird, um den Übertragungsfehler zu korrigieren.

2. Verfahren nach Anspruch 1, **dadurch gekennzeichnet, dass** das spezifische Muster eine sehr geringe Auftrittswahrscheinlichkeit aufweist.

3. Verfahren nach einem der Ansprüche 1 bis 2, **dadurch gekennzeichnet, dass** das spezifische Muster nach der Decodierung eine sehr geringe Energie aufweist.

4. Verfahren nach einem der Ansprüche 1 bis 3, **dadurch gekennzeichnet, dass** der Übertragungsfehler ein Fehlen mindestens eines Signalrahmens ist, der auf einer synchronen stromabwärtigen Verbindung (2; 2₂) übertragen werden soll.

5. Verfahren nach Anspruch 4, **dadurch gekennzeichnet, dass** das Fehlen eines Rahmens aus einem Verlust mindestens eines Signalpakets auf einer asynchronen stromaufwärtigen Verbindung (1) resultiert.

6. Verfahren nach Anspruch 4, **dadurch gekennzeichnet, dass** das Fehlen eines Rahmens aus einer Abwesenheit eines zu übertragenden Rahmens in einem Register (22) des Netzelements (20) resultiert.

7. Verfahren nach einem der Ansprüche 4 bis 6, **dadurch gekennzeichnet, dass** das Benachrichtigungssignal ein das spezifische Muster enthaltender Rahmen ist, gesendet vom Netzelement (20) auf der synchronen stromabwärtigen Verbindung (2), als Ersatz des fehlenden Rahmens, der auf der synchronen stromabwärtigen Verbindung übertragen werden soll.

8. Verfahren nach einem der Ansprüche 1 bis 3, **dadurch gekennzeichnet, dass** der Übertragungsfehler eine Änderung des Signals auf der stromaufwärtigen Verbindung (2₁) ist.

9. Verfahren nach Anspruch 8, **dadurch gekennzeichnet, dass** das Benachrichtigungssignal ein das spezifische Muster enthaltendes Signal ist, gesendet vom Netzelement (30) auf der stromabwärtigen Verbindung (2₂), als Ersatz des veränderten Signals auf der stromaufwärtigen Verbindung (2₁).

10. Netzelement (20), **dadurch gekennzeichnet, dass** es Einrichtungen (23) zur Erfassung mindestens eines Übertragungsfehlers, der sich auf ein codiertes Audiosignal auf einer stromaufwärtigen Verbindung (1) des Netzelements auswirkt, und Einrichtungen (24) enthält, die auf einer stromabwärtigen Verbindung (2) ein mindestens ein spezifisches Fehlerbenachrichtigungsmuster enthaltendes codiertes Benachrichtigungs-Audiosignal an ein Endgerät (10) senden können, wobei das spezifische Muster anstelle eines fehlenden oder veränderten Rahmens eingefügt wird, dazu bestimmt ist, das Endgerät über einen Übertragungsfehler zu informieren, und konfiguriert ist, einen Fehlerkorrekturmechanismus auszulösen, der vom Endgerät verwendet wird, um den Übertragungsfehler zu korrigieren.

11. Computerprogramm, das dazu bestimmt ist, in ein Netzelement (20) nach Anspruch 10 eingesetzt zu werden, das Codeanweisungen zur Ausführung eines Verfahrens nach einem der Ansprüche 1 bis 9 enthält, wenn das Programm von einem Computer ausgeführt wird.

12. Audio-Endgerät (10), **dadurch gekennzeichnet, dass** es ein Modul (14) zur Erfassung mindestens eines spezifischen Benachrichtigungsmusters, das anstelle eines fehlenden oder fehlerhaften Rahmens eingefügt und in einem codierten Benachrichtigungs-Audiosignal übertragen wird, das von einem Netzelement (20) nach der Erfassung eines Übertragungsfehlers durch das Netzelement gesendet wird, der sich auf ein codiertes Audiosignal auf einer stromaufwärtigen Verbindung (1) des Netzelements (20) auswirkt, wobei das Muster dazu bestimmt ist, das Endgerät über einen Übertragungsfehler zu informieren, und ein Modul (13) zur Korrektur mindestens eines Übertragungsfehlers enthält, das nach der Erfassung des spezifischen Benachrichtigungsmusters durch das Audio-Endgerät ausgelöst wird.

13. Verfahren zum Empfang, durch ein Endgerät, eines codierten Benachrichtigungs-Audiosignals, das mindestens ein spezifisches Benachrichtigungsmuster enthält, das anstelle eines fehlenden oder veränderten Rahmens eingefügt wird und dazu bestimmt ist, das Endgerät über einen Übertragungsfehler zu informieren, wobei das Benachrichtigungssignal nach der Erfassung eines Übertragungsfehlers, der sich auf ein codiertes Audiosignal auf einer stromaufwärtigen Verbindung des Netzelements auswirkt, durch ein Netzelement von dem Netzelement auf einer stromabwärtigen Verbindung an das Endgerät gesendet wird, wobei das Verfahren **dadurch gekennzeichnet ist, dass** die Erfassung des spezifischen Benachrichtigungsmusters im codierten Benachrichtigungs-Audiosignal durch das Endgerät einen Schritt der Korrektur des Übertragungsfehlers durch das Endgerät auslöst.

14. Computerprogramm, das dazu bestimmt ist, in einem Audio-Endgerät (10) nach Anspruch 12 eingesetzt zu werden, das Codeanweisungen zur Ausführung eines Verfahrens nach Anspruch 13 enthält, wenn das Programm von einem Computer ausgeführt wird.

## Claims

1. Method of notification, to a terminal (10) on a downstream link (2; 2₂) of a network element (20; 30), of a transmission defect affecting a coded audio signal on an upstream link (1; 2₁) of said network element, **characterized in that** it comprises:
- a step of emission by the network element (20; 30), on said downstream link, of an audio coded notification signal containing at least one specific notification pattern inserted in place of a missing or altered frame, destined for the terminal (10); said specific pattern being intended to inform said terminal of a transmission defect and said specific pattern being configured to trigger an error correction mechanism implemented by the terminal to correct said transmission defect.

2. Method according to Claim 1, **characterized in that** said specific pattern exhibits a very low probability of occurrence.

3. Method according to one of Claims 1 to 2, **characterized in that**, after decoding, said specific pattern exhibits a very low energy.

4. Method according to any one of Claims 1 to 3, **characterized in that** said transmission defect is the missing of at least one signal frame to be transmitted on a synchronous downstream link (2; 2₂).

5. Method according to Claim 4, **characterized in that** said missing of a frame results from a loss of at least one signal packet on an asynchronous upstream link (1).

6. Method according to Claim 4, **characterized in that** said missing of a frame results from an absence of frame to be transmitted in a register (22) of said network element (20).

7. Method according to any one of Claims 4 to 6, **characterized in that** said notification signal is a frame containing said specific pattern, emitted by the network element (20) on the synchronous downstream link (2), in replacement for said missing frame to be transmitted on said synchronous downstream link.

8. Method according to any one of Claims 1 to 3, **characterized in that** said transmission defect is an alteration of the signal on the upstream link (2₁).

9. Method according to Claim 8, **characterized in that** said notification signal is a signal containing said specific pattern, emitted by the network element (30) on the downstream link (2₂), in replacement for said altered signal on the upstream link (2₁).

10. Network element (20), **characterized in that** it comprises means (23) for detecting at least one transmission defect affecting a coded audio signal on an upstream link (1) of said network element, and means (24) able to emit on a downstream link (2), an audio coded notification signal containing at least one specific defect notification pattern, destined for the terminal (10), said specific pattern being inserted in place of a missing or altered frame, being intended to inform said terminal of a transmission defect and being configured to trigger an error correction mechanism implemented by the terminal to correct said transmission defect.

11. Computer program, intended to be embedded in a network element (20) according to Claim 10, comprising code instructions for the execution of a method according to any one of Claims 1 to 9 when said program is executed by a computer.

12. Audio terminal (10), **characterized in that** it comprises a module (14) for detecting at least one specific notification pattern inserted in place of a missing or defective frame and transmitted in an audio coded notification signal emitted by a network element (20), subsequent to the detection by said network element of a transmission defect affecting a coded audio signal on an upstream link (1) of said network element (20), said pattern being intended to inform the terminal of a transmission defect, and a module (13) for correcting at least one transmission defect triggered subsequent to the detection of said specific notification pattern by the audio terminal.

13. Method of reception, by a terminal, of an audio coded notification signal containing at least one specific notification pattern inserted in place of a missing or altered frame and intended to inform the terminal of a transmission defect, said notification signal being emitted by a network element on a downstream link destined for said terminal, subsequent to the detection by the network element of a transmission defect affecting a coded audio signal on an upstream link of said network element, the method is **characterized in that** the detection by the terminal of said specific notification pattern in said audio coded notification signal triggers a step of correction by said terminal of said transmission defect.

14. Computer program, intended to be embedded in an audio terminal (10) according to Claim 12, comprising code instructions for the execution of a method according to Claim 13 when said program is executed by a computer.
